# EUROPÄISCHE PATENTANMELDUNG

(11) **EP 2 055 526 A1**
(43) Veröffentlichungstag der Anmeldung: **06.05.2009**
(21) Anmeldenummer: 07021172.7
(22) Anmeldetag: 30.10.2007
(51) Int. Cl.: B60P 1/34

(54) **Fahrzeug für das seitliche Abladen von Schüttgut**

(30) Priorität: 29.10.2007 AT 17472007
(71) Anmelder: Hans Brantner & Sohn Fahrzeugbaugesellschaft m.b.H, 2136 Laa a. d. Thaya (AT)
(72) Erfinder: Brantner, Hans, 2136 Laa an der Thaya (AT)
(74) Vertreter: Grabherr, Claudia

(57) **Zusammenfassung**

Bei einem Fahrzeug für den Transport und das Umladen und Abladen von Schüttgut mit einem Schüttgutbehälter (1, 17), der in seiner Umladestellung seitlich geöffnet ist, liegt, wenn der Schüttgutbehälter in seiner Umladestellung ist, der Schwerpunkt des Fahrzeuges über dem Bereich zwischen den Rädern (16) des Fahrzeugs.

## Beschreibung

Die Erfindung betrifft ein Fahrzeug für den Transport und das Umladen und Abladen von Schüttgut.

Derzeit gibt es folgende Fahrzeugtypen mit denen ein Abladen und Umladen von Schüttgut z.B. auf ein anderes Fahrzeug erfolgen kann. Es gibt Fahrzeuge, deren Schüttgutbehälter nach hinten hochgekippt werden kann. Diese haben den Nachteil, dass nur ganz langsam im Rückwärtsgang in die Umladeposition gefahren werden kann, wodurch ein enormer Zeitverlust entsteht. Außerdem wird das Fahrzeug durch das Hochkippen sehr hoch und es besteht die Gefahr, dass es umfällt. Ferner gibt es Fahrzeuge, die durch seitliches Kippen des Schüttgutbehälters entladen werden können. Nachteilig ist, dass sich dabei der Schwerpunkt des gesamten Fahrzeugs soweit zur Seite hin verschiebt, dass das gesamte Fahrzeug leicht umfallen kann. Außerdem ist keine kontinuierlich dosierte Beschickung möglich. Schließlich gibt es sogenannte Abschiebewägen, bei denen mittels eines Schiebers das Schüttgut nach hinten abgeschoben wird. Die Umladeposition wird auch hier wiederum nur durch langsames Rückwärtsfahren mit dem entsprechenden Zeitverlust erreicht. Außerdem kann beim Rückwärtsabschieben keine gleichmäßige Verteilung über die gesamte Länge der Ladefläche des zu beladenen Fahrzeugs vorgenommen werden, ohne dass das zu beladende Fahrzeug extra bewegt wird.

Aufgabe der vorliegenden Erfindung ist es ein Fahrzeug für den Transport und das Umladen und Abladen von Schüttgut zu schaffen, mit dem ein rasches Umladen oder Abladen erfolgen kann und die Gefahr des Umfallens des Fahrzeuges vermieden wird.

Die Aufgabe wird durch ein Fahrzeug für den Transport und das Umladen und Abladen von Schüttgut mit einem Schüttgutbehälter, der in seiner Umladestellung seitlich geöffnet ist, gelöst, das dadurch gekennzeichnet ist, dass, wenn der Schüttgutbehälter in seiner Umladestellung ist, der Schwerpunkt des Fahrzeuges über dem Bereich zwischen den Rädern des Fahrzeuges liegt. Das seitliche Zufahren in die richtige Position zum Umladen oder Abladen kann rasch erfolgen und das Fahrzeug kommt nicht in Gefahr umzufallen.

Vorzugsweise ist in dem Schüttgutbehälter ein beweglicher Schieber angeordnet, dessen Bewegungsrichtung normal zur Fahrzeuglängsachse verläuft, sodass eine kontrollierte Mengenabgabe möglich ist.

Gemäß einer vorteilhaften Ausführungsform sind mindestens zwei Schüttgutbehälter vorgesehen. Während ein Schüttgutbehälter entladen wird, verbleibt der andere in seiner möglichst tiefen, zur Fahrzeugachse symmetrischen Anordnung und trägt zur Sicherung der Stabilität des Fahrzeugs bei.

Das Fahrzeug kann eine vorzugsweise hydraulische Hebevorrichtung für den bzw. jeden Schüttgutbehälter enthalten, so dass der Umladevorgang in der Höhe an z.B. das Fahrzeug, auf welches umgeladen werden soll, angepasst werden kann.

Vorteilhafterweise ist eine vorzugsweise hydraulische Drehvorrichtung für den bzw. jeden Schüttgutbehälter vorgesehen und das Fahrzeug weist eine Lagerung für den bzw. jeden Schüttgutbehälter auf, die eine Drehachse für die Drehbewegung in die Umladestellung des bzw. jedes Schüttgutbehälters parallel zur Fahrzeuglängsachse definiert.

Die Drehachse ist vorzugsweise an einer oberen seitlichen Kante des bzw. jedes Schüttgutbehälters definiert.

Alternativ kann, statt zum Umladen den Schüttgutbehälter zu drehen, der Schüttgutbehälter eine zum Umladen vorzugsweise hydraulisch zu öffnende Seitenwand aufweisen.

Die Hebevorrichtung, die Drehvorrichtung und die Vorrichtung zum Öffnen der Seitenwand können auch pneumatisch, mechanisch oder elektrisch sein.

Zur Verdeutlichung der Erfindung wird diese nunmehr anhand eines Ausführungsbeispiels für ein erfindungsgemäßes Fahrzeug, das in den beiliegenden Zeichnungen schematisch dargestellt ist, näher beschrieben.

Dabei zeigen die Fig. 1 und 2 einen Überladewagen gemäß dem Stand der Technik und die Fig. 3 einen Abschiebewagen gemäß dem Stand der Technik. Die Fig. 4 zeigt das erfindungsgemäße Fahrzeug mit den Schüttgutbehältern in Transportstellung. In Fig. 5 ist einer der Schüttgutbehälter angehoben. In Fig. 6 ist eine alternative Hebevorrichtung dargestellt. In Fig.7 ist einer der Schüttgutbehälter angehoben und um 90° gedreht. In Fig. 8 ist das Umladen des Schüttgutes auf ein anderes Fahrzeug mit Hilfe eines Schiebers dargestellt.

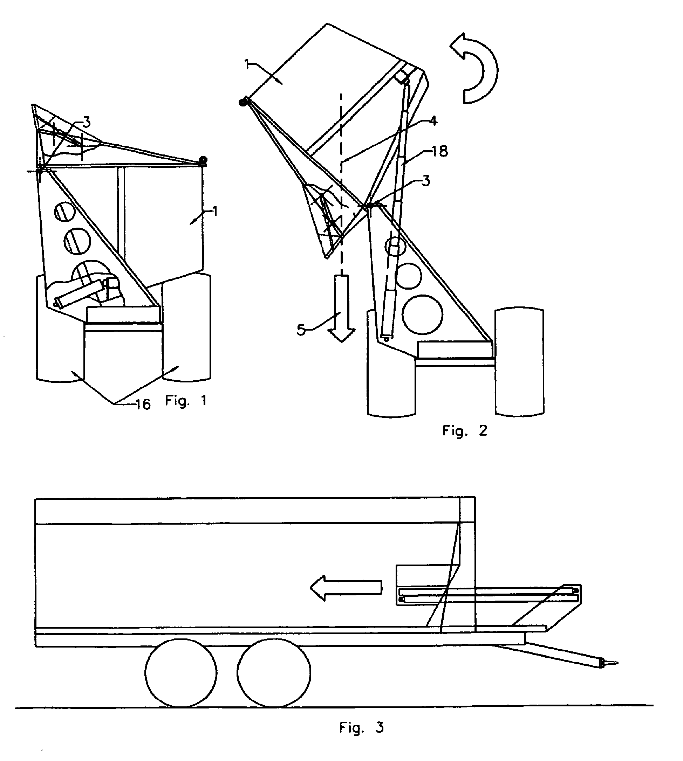

Fig. 1 zeigt einen Überladewagen des Standes der Technik in Transportstellung. Das im Schüttgutbehälter 1 befindliche Schüttgut ist annähernd symmetrisch zur Fahrzeuglängsmittelebene 2 verteilt. Zum Umladen, wie es in Fig. 2 gezeigt ist, wird der Schüttgutbehälter 1 von einer Hydraulik 18 um eine Achse 3 in der Nähe seiner oberen seitlichen Kante gedreht und der Schwerpunkt des Fahrzeugs verlagert sich, wie durch die strichlierte Linie 4 und den Pfeil 5 angedeutet, so, dass er außerhalb der Räder 16 zu liegen kommt. Die erforderliche Standstabilität ist nicht vorhanden.

Beim Abschiebewagen des Standes der Technik, der in Fig.3 gezeigt ist, wird zwar die Symmetrie des Ladeguts zur Fahrzeugachse auch beim Entladen gewahrt, jedoch muss im Rückwärtsgang in die Umladeposition gefahren werden. Ein zusätzliches Hochkippen, um das Schüttgut rascher aus der verhältnismäßig kleinen Entladeöffnung zu entladen, gefährdet wiederum die Stabilität.

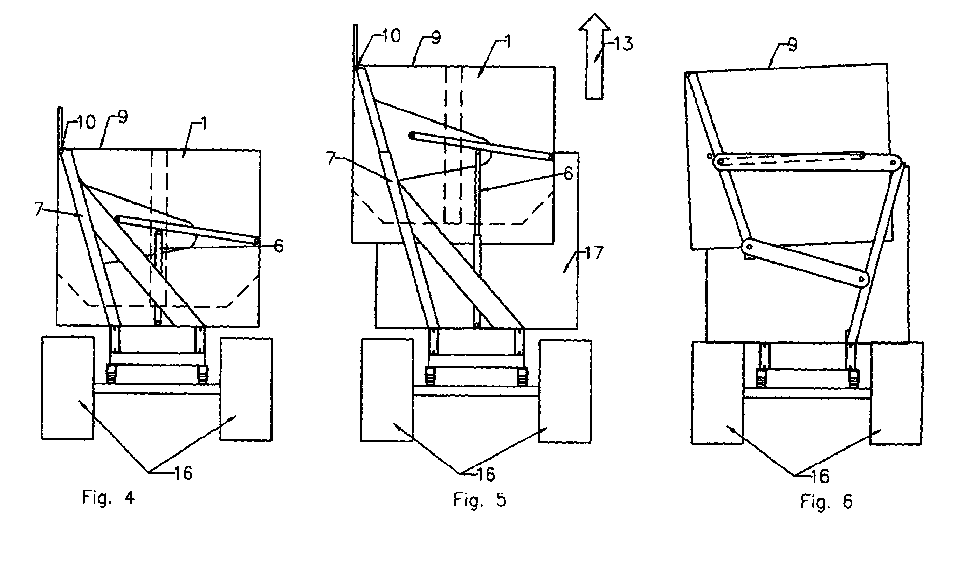

Fig. 4 zeigt das erfindungsgemäße Fahrzeug mit dem Schüttgutbehälter 1 in Transportstellung. Das Schüttgut ist symmetrisch zur Fahrzeuglängsachse verteilt.

Wie in Fig.,5 durch den Pfeil 13 angedeutet, kann der Schüttgutbehälter 1 von einer Hebevorrichtung, z.B. einem Hydraulikzylinder 6 angehoben werden. Ein Teleskopträger 7 ermöglicht die Verschiebung der Lagerung 10 des Schüttgutbehälters 1. Alternativ kann die Hebevorrichtung auch im Teleskopträger 7 integriert sein. Ein weitere Ausführungsform für die Hebevorrichtung mit einem Zwischenrahmen ist in Fig.,6 dargestellt. Durch das Heben des Schüttgutbehälters 1 kann eine Höhenanpassung für das Umladen des Schüttgutes, entsprechend dem Niveau, auf das umgeladen werden soll, vorgenommen werden. Der Schwerpunkt verschiebt sich dabei nach oben, aber nur unbedeutend aus der Fahrzeuglängsmittelebene, so dass die Stabilität gewahrt bleibt. In der besonderen, dargestellten Ausführungsform sind zwei getrennt bewegbare Schüttgutbehälter 1, 17 vorgesehen, wobei der nicht angehobene Schüttgutbehälter 17 den Gesamtschwerpunkt gegenüber einer Ausführungsvariante mit einem einzigen Schüttgutbehälter nach unten verschiebt und das Fahrzeug noch stabiler macht.

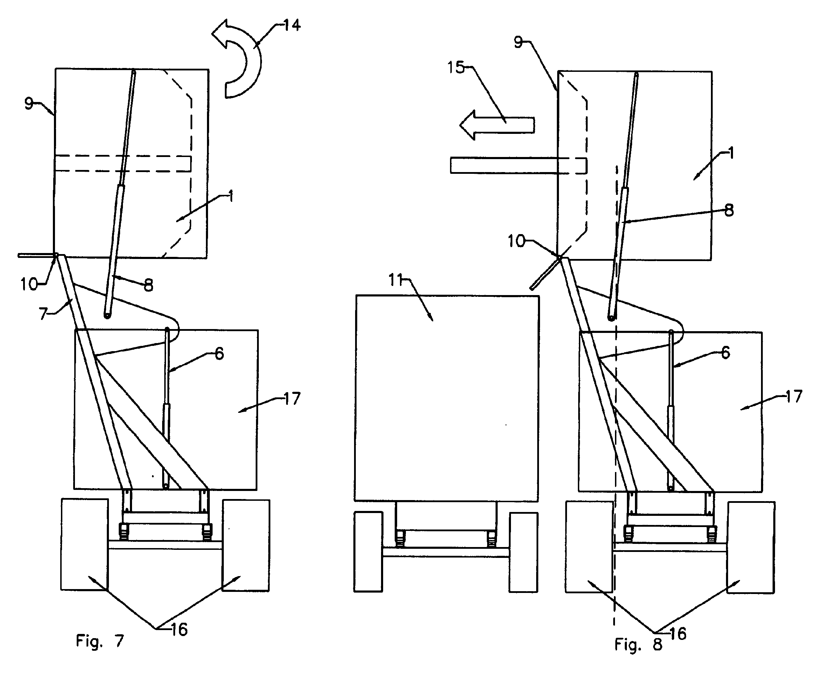

Wie in Fig. 7 gezeigt kann zum Entladen des Schüttgutbehälters 1 dieser von einer Drehvorrichtung - im vorliegenden Fall einem Hydraulikzylinder 8 - in einer Lagerung 10, die eine Drehachse entlang der seitlichen oberen Kante des Schüttgutbehälters 1 definiert, um 90° gedreht werden (Pfeil 14), sodass die in Transportstellung oben gelegene Öffnung 9 des Schüttgutbehälters 1 dann auf die Seite weist. Der Schwerpunkt wird dabei noch mehr nach oben verschoben, liegt aber immer noch über dem Bereich zwischen den Rädern 16, so dass die erforderliche Standstabilität gegeben ist.

Statt die Öffnung des Schüttgutbehälters auf die Seite zu drehen, kann der Schüttgutbehälter in der ursprünglichen Ausrichtung bleiben und eine seiner Seitenwände geöffnet werden. Um dabei die selbe Entladehöhe zu erreichen, wird der Schüttgutbehälter noch weiter angehoben.

Schließlich sieht man in Fig. 8, wie Schüttgut mit Hilfe eines Schiebers 12, der sich quer zur Fahrzeuglängsebene bewegt, aus dem Schüttgutbehälter 1 in den Laderaum 11 eines seitlich des erfindungsgemäßen Fahrzeugs stehenden Fahrzeugs dosiert entladen wird, was durch den Pfeil 15 angedeutet ist. Da der Gesamtschwerpunkt nicht außerhalb der Räder 16 liegt, ist die notwendige Stabilität des Fahrzeugs gegeben. Besonders stabil ist die Variante des erfindungsgemäßen Fahrzeugs, die zwei Schüttgutbehälter 1, 17 enthält. Während ein Schüttgutbehälter 1 entladen wird, bleibt der andere Schüttgutbehälter 17 in Transportstellung, d.h. tief unten und symmetrisch zur Fahrzeuglängsachse, und trägt zur Stabilisierung bei.

## Patentansprüche

1. Fahrzeug für den Transport und das Umladen und Abladen von Schüttgut mit einem Schüttgutbehälter, der in seiner Umladestellung seitlich geöffnet ist, **dadurch gekennzeichnet, dass**, wenn der Schüttgutbehälter (1, 17) in seiner Umladestellung ist, der Schwerpunkt des Fahrzeuges über dem Bereich zwischen den Rädern (16) des Fahrzeuges liegt.

2. Fahrzeug nach Anspruch 1, **dadurch gekennzeichnet, dass** in dem Schüttgutbehälter (1, 17) ein beweglicher Schieber (12) angeordnet ist, dessen Bewegungsrichtung normal zur Fahrzeuglängsachse verläuft.

3. Fahrzeug nach Anspruch 1 oder 2, **dadurch gekennzeichnet, dass** mindestens zwei Schüttgutbehälter (1, 17) vorgesehen sind.

4. Fahrzeug nach einem der vorhergehenden Ansprüche, **dadurch gekennzeichnet, dass** eine vorzugsweise hydraulische Hebevorrichtung (6) für den bzw. jeden Schüttgutbehälter (1, 17) vorgesehen ist.

5. Fahrzeug nach einem der vorhergehenden Ansprüche, **dadurch gekennzeichnet, dass** eine vorzugsweise hydraulische Drehvorrichtung (8) für den bzw. jeden Schüttgutbehälter vorgesehen ist und dass das Fahrzeug eine Lagerung (10) für den bzw. jeden Schüttgutbehälter (1, 17) aufweist, die eine Drehachse für die Drehbewegung in die Umladestellung des bzw. jedes Schüttgutbehälters (1, 17) parallel zur Fahrzeuglängsachse definiert.

6. Fahrzeug nach Anspruch 5, **dadurch gekennzeichnet, dass** die Drehachse an einer oberen seitlichen Kante des bzw. jedes Schüttgutbehälters (1, 17) definiert ist.

7. Fahrzeug nach einem der Ansprüche 1 bis 4, **dadurch gekennzeichnet, dass** der Schüttgutbehälter eine zum Umladen vorzugsweise hydraulisch zu öffnende Seitenwand aufweist.
